(19) Europäisches Patentamt
European Patent Office
Office européen des brevets

(11) Veröffentlichungsnummer: **0 429 894 A2**

(12) # EUROPÄISCHE PATENTANMELDUNG

(21) Anmeldenummer: **90121174.8**

(22) Anmeldetag: **06.11.90**

(51) Int. Cl.5: **C08G 59/42**, C08G 59/68

(30) Priorität: **17.11.89 DE 3938200**

(43) Veröffentlichungstag der Anmeldung:
**05.06.91 Patentblatt 91/23**

(84) Benannte Vertragsstaaten:
**AT BE CH DE DK ES FR GB IT LI NL SE**
**Patentblatt**

(71) Anmelder: **BASF Lacke + Farben Aktiengesellschaft**
**Max-Winkelmann-Strasse 80**
**W-4400 Münster(DE)**

(72) Erfinder: **Heller, Hans Joachim, Dr.**
**Blankeneser Hauptstrasse 62**
**W-2000 Hamburg 55(DE)**
Erfinder: **Blum, Rainer**
**Bannwasserstrasse 58**
**W-6700 Ludwigshafen(DE)**
Erfinder: **Mueller, Armin**
**Guntherstrasse 51**
**W-2000 Hamburg 76(DE)**
Erfinder: **Hoessel, Peter, Dr.**
**Salierstrasse 71**
**W-6707 Schifferstadt(DE)**

(74) Vertreter: **Karau, Wolfgang, Dr. et al**
**BASF Aktiengesellschaft Carl-Bosch-Strasse 38**
**W-6700 Ludwigshafen(DE)**

(54) **Einkomponentige Epoxidharzmassen.**

(57) Die Erfindung betrifft lagerstabile einkomponentige Epoxidharzmassen, erhältlich durch Umsetzung von härtbaren Epoxidverbindungen mit mindestens einem Härter aus der Verbindungsklasse der Polycarbonsäureanhydride und mindestens einem Härtungsbeschleuniger ausgewählt aus der Verbindungsklasse der quarternären Ammonium- oder Phosphoniumsalze bei Temperaturen von ca. 30 bis ca. 150 °C und anschließendes Abkühlen der noch flüssigen oder thermoplastisch verarbeitbaren Epoxidharzmasse auf eine Temperatur unter 30 °C.

EP 0 429 894 A2

# EINKOMPONENTIGE EPOXIDHARZMASSEN

Die vorliegende Erfindung betrifft lagerstabile, einkomponentige Epoxidharzmassen, erhältlich durch Umsetzung von härtbaren Epoxidverbindungen mit mindestens einem Härter aus der Verbindungsklasse der Polycarbonsäureanhydride und mindestens einem Härtungsbeschleuniger ausgewählt aus der Verbindungsklasse der quarternären Ammonium- oder Phosphoniumsalze bei Temperaturen von ca. 30 bis ca. 150 ° C und anschließendes Abkühlen der noch flüssigen oder thermoplastisch verarbeitbaren Epoxidharzmasse auf eine Temperatur unter 30 ° C.

Epoxidverbindungen können durch Zusatz von Polycarbonsäureanhydriden gehärtet werden. Aus der DE-A-31 51 540 ist bekannt, daß quarternäre Phosphonium- oder Ammoniumsalze als Härtungsbeschleuniger eingesetzt werden können. Die Härtungsbeschleuniger und die Polycarbonsäureanhydride werden unmittelbar vor der Verarbeitung mit den Epoxidverbindungen gemischt.

Die Nachteile eines solchen Zweikomponentensystems bestehen darin, daß die Eigenschaften des ausgehärteten Produkts durch ungenügendes Mischen der Komponenten verschlechtert werden und die benötigte Verarbeitungsmenge schon vor dem Mischvorgang exakt bestimmt werden muß.

Es ist daher wünschenswert, einkomponentige Epoxidharzmassen einzusetzen, bei denen der Mischvorgang entfällt. Der Wunsch nach einkomponentigen Epoxidmassen hat zu einer Reihe von Vorschlägen geführt, die im wesentlichen eine verzögerte Reaktion durch Einsatz latenter Härter betreffen. In der US-A-2 847 395 wird der Einsatz von Carbonsäurehydraziden in der US-A-3 087 910 der Einsatz von Hydrazinderivaten heterocyklicher Ringsysteme, welche eine Pyridmidin- oder Triazin-Struktur aufweisen, beschrieben.

Aus der US-A-4 268 656 geht hervor, daß der Einsatz bekannter Härter in Kombination mit einem Reaktionsprodukt aus einem Polyepoxid und N-substituierten Piperazinen oder Homopiperazinen nach Mischen mit einer Epoxidharzmasse zu einer verlängerten Lagerstabilität der erhaltenen einkomponentigen Epoxidharzmasse führt.

EP-A-0 149 971 betrifft die Verwendung eines einkomponentigen Epoxidharzes zum Beschichten von feststehenden Widerständen, wobei das Epoxidharz ein Dicarbonsäuredihydrazid oder ein Hydrazinderivat einer Triazinverbindung als Härter enthält.

Aus der CH-A-211 116 ist bekannt, daß man durch Zusammenschmelzen eines Produkts aus 4,4'-Dioxydiphenyl-2,2-propan und Epichlorhydrin mit Phthalsäureanhydrid bei 120 ° C nach einer Stunde ein in Aceton lösliches Harz erhält, welches bei 170 ° C in 30 min gehärtet werden kann. Über die Stabilität des ungehärteten Harzes werden keine Aussagen gemacht. Nachteilig bei dem Verfahren sind die zur Härtung notwendigen hohen Temperaturen bzw. die langen Härtungszeiten.

Der vorliegenden Erfindung lag daher die Aufgabe zugrunde, einkomponentige Epoxidharzmassen zur Verfügung zu stellen, die eine gute Stabilität aufweisen und bei nicht zu hohen Temperaturen gehärtet werden können. Das einkomponentige Epoxidharz soll durch Einsatz einfacher, handelsüblicher Verbindungen erhalten werden können. Auf Stoffe, die möglicherweise giftige Verbindungen, z. B. Hydrazin, freisetzen, soll verzichtet werden.

Die Aufgabe wurde erfindungsgemäß gelöst durch lagerstabile einkomponentige Epoxidharzmassen, erhältlich durch Umsetzung von härtbaren Epoxidverbindungen mit mindestens einem Härter aus der Verbindungsklasse der Polycarbonsäureanhydride und mindestens einem Härtungsbeschleuniger ausgewählt aus der Verbindungsklasse der quarternären Ammonium- oder Phosphoniumsalze bei Temperaturen von ca. 30 ° C bis ca. 150 ° C und anschließendes Abkühlen der noch flüssigen oder thermoplastisch verarbeitbaren Epoxidharzmasse auf eine Temperatur unter 30 ° C .

Die vorliegende Erfindung ermöglicht es, die konventionellen zweikomponentigen Epoxidsysteme aus Polyepoxidverbindungen und gegebenenfalls zusätzlich als Verdünner eingesetzten Epoxidverbindungen einerseits sowie Polycarbonsäureanhydriden als Härter andererseits einer einkomponentigen Verwendungstechnologie bei kurzen Härtungszeiten und niedrigen Härtungstemperaturen zugänglich zu machen.

Dies gelingt überraschend dadurch, daß härtbare Epoxidverbindungen mit Polycarbonsäureanhydriden unter Zusatz von quarternären Phosphonium- oder Ammoniumsalzen vermischt und durch Erwärmen einer Vorreaktion unterzogen werden. Die Vorreaktion wird durch Abkühlen unterbrochen. Das so erhaltene nicht ausgehärtete Epoxidharz zeichnet sich durch eine ausgezeichnete Lagerstabilität aus. Die Aushärtung zu vernetzten Epoxidharzen von hervorragenden Gebrauchseigenschaften erfolgt durch Erwärmen bei der späteren Verwendung. Die Eigenschaften der Endprodukte sind dabei weitgehend unabhängig von der Lagerzeit.

Durch Variation der Temperatur und der Dauer der Vorreaktion können bei Raumtemperatur feste, thermoplastisch verarbeitbare einkomponentige Epoxidharze aber auch flüssige einkomponentige Epoxidharze hergestellt werden. Es ist besonders überraschend, daß sich auch die flüssigen Systeme durch eine

hohe Lagerstabilität auszeichnen.

Härtbare Epoxidverbindungen sind z. B. Polyepoxidverbindungen, die durchschnittlich mehr als eine Epoxidgruppe pro Molekül aufweisen. Diese können in den einkomponentigen Epoxidharzmassen allein oder in Mischungen mit an deren härtbaren Polyepoxidverbindungen sowie in Mischungen mit härtbaren Epoxidverbindungen, welche als Verdünner dienen, eingesetzt werden. Von Bedeutung sind z. B. Polyepoxidverbindungen mit mehr als einer an einem Heteroatom wie Schwefel, vorzugsweise Stickstoff oder Sauerstoff gebundenen Glycidyl-, ß-Methylglycidyl- oder 2,3-Epoxycyclopentylgruppe, wie sie in der DE-A-31 51 540 bzw. DE-C-28 09 799 genannt werden. Von besonderer Bedeutung sind Polyepoxidverbindungen, welche als Einheiten Glycidylether von mehrwertigen Phenolen, aliphatischen oder cycloaliphatischen Alkoholen sowie Glycidylester von Di- oder Tricarbonsäuren oder N-Glycidylderivate von Aminen, Amiden, heterocyclischen Stickstoffbasen oder Isocyanaten bzw. Isocyanuraten enthalten. Von ganz besonderer Bedeutung sind Polyepoxidverbindungen auf Basis von Bisphenol-A oder Hexahydrophthalsäure.

Als Verdünner können mono- oder polyfunktionelle Epoxidverbindungen dienen. Monofunktionelle Epoxidverbindungen sind z. B. Styroloxid, Phenylglycidylether, Butylglycidylether, Isooktylglycidylether und Glycidylester von aliphatischen, vorzugsweise verzweigten aliphatischen oder cycloaliphatischen Monocarbonsäuren.

Polyfunktionelle Verdünner sind z. B. Glycidylether von mehrwertigen Phenolen, z. B. Bisphenol A-diglycidylether oder Glycidylester von Di- oder Tricarbonsäuren, wie Hexahydrophthalsäure.

Die eingesetzten Polyepoxidverbindungen können mit einem einzigen oder mit einem Gemisch von Verdünnern versetzt werden. Von besonderer Bedeutung sind Mischungen eines Polyepoxids auf Basis des Bisphenol-A mit Monoepoxidverbindungen, vorzugsweise Phenylglycidylether, als Verdünner.

Die härtbaren Epoxidverbindungen werden mit mindestens einem Härter aus der Verbindungsklasse der Polycarbonsäureanhydride und mindestens einem Härtungsbeschleuniger aus der Verbindungsklasse der quarternären Ammonium- oder Phosphoniumsalze umgesetzt.

Als Polycarbonsäureanhydride kommen innere Anhydride von aromatischen, cycloaliphatischen und linearen oder verzweigten aliphatischen Polycarbonsäuren in Frage. Die Polycarbonsäureanhydride können gegebenenfalls durch Heteroatome, z. B. Chlor substituiert sein. Bevorzugt sind Polycarbonsäureanhydride mit 4 bis 20 C-Atomen. Beispiele sind Maleinsäureanhydrid, Dichlormaleinsäureanhydrid, Dodecenylbernsteinsäureanhydrid, Pyromellithsäureanhydrid, Trimellithsäureanhydrid, Methyltetrahydrophthalsäureanhydride, Methylen-endomethylentetrahydrophthalsäureanhydrid und Hexachlorendomethylentetrahydrophthalsäureanhydrid.

Besonders bevorzugt sind Bernsteinsäureanhydrid, Phthalsäureanhydrid, Tetrahydrophthalsäureanhydrid, Hexahydrophthalsäureanhydrid, Methylhexahydrophthalsäureanhydrid oder ein Gemisch dieser Anhydride. Es können auch Gemische von Polycarbonsäureanhydriden eingesetzt werden.

Das Verhältnis von Polycarbonsäureanhydrid zu dem Gesamtgehalt an Epoxidgruppen der härtbaren Epoxidverbindungen ist so gewählt, daß auf eine Epoxidgruppe 1,5 bis 0,1, bevorzugt 1,1 bis 0,3, besonders bevorzugt 1,0 bis 0,7 Anhydridgruppen eingesetzt werden.

Als Härtungsbeschleuniger werden quarternäre Phosphoniumsalze oder Ammoniumsalze eingesetzt. Vorzugsweise werden quarternäre Phosphonium- oder Ammoniumsalze der allgemeinen Formel

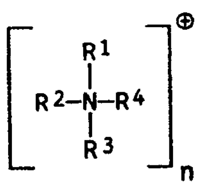 $X^{m\ominus}$ ; 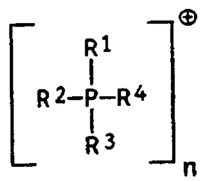 $X^{m\ominus}$

wobei n und m 1, 2 oder 3 sein können und $R^1$ bis $R^4$ unabhängig voneinander einen linearen oder verzweigten aliphatischen Rest mit 1 bis 20, bevorzugt 1 - 10, besonders bevorzugt 1 - 5 C-Atomen, einen gegebenenfalls substituierten, cycloaliphatischen oder aromatischen Rest mit insgesamt 5 - 20, bevorzugt 5 - 10 C-Atomen darstellen. Als Beispiel sei das Tri-(n-butyl)tetradecylphosphoniumkation genannt.

Beim Anion X kann es sich um das Anion einer anorganischen oder einer organischen Säure, z. B. einer Carbonsäure oder Sulfonsäure handeln. Es kann auch das Anion einer oligomeren oder polymeren Verbindung vorliegen.

Bevorzugt sind Anionen von Halogenwasserstoffsäuren, der Ameisensäure oder Essigsäure und Anionen der mehrwertigen organischen Säuren Phthalsäure, Isophthalsäure, Terphthalsäure, Mellithsäure, Trimellithsäure, Pyromellithsäure oder Mischungen dieser Anionen.

Besonders bevorzugte quarternäre Phosphonsium- und Ammoniumverbindungen sind die Salze des

Tetrabutylammoniumkations bzw. des n-Butyltriphenylphosphoniumkations mit einem der bevorzugten Anionen.

Es kann sowohl ein einzelner Härtungsbeschleuniger als auch ein Gemisch von Härtungsbeschleunigern eingesetzt werden. Die Härtungsbeschleuniger werden vorzugsweise in einer Gesamtmenge von ca. 0,001 bis ca. 0,1 Gew.-%, besonders bevorzugt von 0,05 bis 0,1 Gew.-% bezogen auf die einkomponentige Epoxidharzmasse eingesetzt.

Beim Verfahren zur Herstellung der erfindungsgemäßen Epoxidharzmassen werden die härtbaren Epoxidverbindungen, Polycarbonsäureanhydride und Härtungsbeschleuniger miteinander vermischt und durch Erwärmen auf eine Temperatur zwischen 30 und 150 °C einer Vorreaktion unterworfen. Bevorzugt wird die Vorreaktion in einem Temperaturbereich zwischen 40 und 120 °C ausgeführt. Während der Vorreaktion nimmt die Viskosität zu. Die Dauer der Vorreaktion hängt von der gewählten Temperatur sowie dem jeweiligen Stoffsystem ab. Die Vorreaktion wird nur solange fortgesetzt, daß die Epoxidharzmasse noch flüssig oder thermoplastisch verarbeitbar bleibt.

Nach Abkühlen auf eine Temperatur unterhalb von 30 °C, z. B. durch ein Eisbad setzt sich die Vernetzungs- bzw. Aushärtungsreaktion nicht fort. Die so erhaltene flüssige oder thermoplastisch verarbeitbare Epoxidharzmasse zeichnet sich durch eine gute Lagerstabilität aus und kann als einkomponentige Epoxidmasse zu einem späteren Zeitpunkt weiter verarbeitet werden.

Die erfindungsgemäßen einkomponentigen Epoxidmassen können weitere Zusatzstoffe enthalten.

Dabei kann es sich z. B. um weitere Katalysatoren handeln, um besondere Härtungszeiten zu erzielen. Diese zusätzlichen Katalysatoren können, wenn sie die Stabilität der Epoxidmasse verschlechtern, kurz vor der Verarbeitung der einkomponentigen Epoxidmasse zugesetzt werden.

Weitere Katalysatoren sind z. B. tert. Amine wie Tributylamin, Dimethylbenzylamin, Dimethylaminopyrridin, Dimethylanilin oder Phosphite wie Di(n-octyl)phosphit,m Trinonylphenylphosphit, Didecylphenylphosphit oder auch Metallsalze wie Zinkoctoat, Zinkisodecanoat, Zinnoctoat oder Dibutylzinndilaurat.

Weitere Zusätze, die der Einstellung spezieller Gebrauchseigenschaften dienen, sind bekannt, es seien nur beispielhaft Farbpigmente; organische und anorganische Füllstoffe; verstärkend wirkende, organische und anorganische Fasern; anorganische und organische, viskositätsregelnde Stoffe; flüssige Verschnittmittel und Weichmacher genannt.

Die Zusatzstoffe können der einkomponentigen Epoxidmasse vor der Verwendung, nach der Vorreaktion, falls die Zusatzstoffe die Lagerstabilität nicht unerwünscht verschlechtern oder schon vor der vorreaktion, falls die Vorreaktion nicht unerwünscht beeinflußt wird, zugegeben werden.

Die nach der Vorreaktion erhaltenen einkomponentigen Epoxidmassen können flüssig oder fest sein. Liegt eine Flüssigkeit vor, kann diese ebenso wie eine feste einkomponentige Epoxidmasse bei der späteren Ver4wendung durch weiteres Erwärmen ausgehärtet werden. Eine feste einkomponentige Epoxidmasse kann in üblicher Weise zunächst zu Pulver, Granulat oder Pastillen verarbeitet werden oder direkt in eine für die spätere Verwendung gewünschter Endform gebracht werden.

Die einkomponentigen Epoxidmassen können für duroplastische gegebenenfalls faserverstärkte Formteile verwendet werden. Die flüssigen oder festen einkomponentigen Epoxidmassen können z. B. auf flächige oder strangförmige Fasersubstrate appliziert oder mit kurzstabligen Fasern vermischt werden.

Die einkomponentigen Epoxidmassen können als Isolier-, Einkapselungs-, Einbettungs-, Planarisierungs-, Strukturierungs- oder Trägermaterial in der Elektronik oder Elektrotechnik, z. B. für Wicklungen, Spulen, Transformatoren, Widerstände, Leiterplatten, Chips verwendet werden.

Weitere Verwendungen betreffen das Beschichten von Oberflächen.

## Beispiele

Im folgenden bedeutet T Gewichtsteil.

### Beispiel 1

Unter Rühren wurden gemischt

455 T Epikote® 828 (Epoxidharz auf Bisphenol A-Basis, Hersteller: SHELL-Chemie)
92 T Phenylglycidylether
453 T Hexahydrophthalsäureanhydrid
0,09 T Tetrabutylammoniumjodid (gelöst in einem Teil des Phenylglycidylethers)

Diese Mischung wird für 20 Min. auf 55 °C erwärmt und dann mit einem Eisbad rasch abgekühlt.

### Vergleichsbeispiele (VB)

VB1, VB2

Es wurde die gleiche Rezeptur wie in Beispiel 1 verwendet, aber anstelle Tetrabutylammoniumjodid wurde Dimethylanilin (DMA) als Beschleuniger eingesetzt und es wurde keine Vorreaktion durchgeführt.

VB3

Es wurde die gleiche Rezeptur wie bei B1 verwendet, aber keine Vorreaktion durchgeführt.

VB4, VB5

Es wurden die gleichen Rezepturen wie bei VB1 und VB2 verwendet. Es wurde eine Vorreaktion durchgeführt wie bei B1, dabei stieg die Viskositäten schon stark an.

Prüfung der Beispiele

Nach Herstellung der einkomponentigen Epoxidharzmassen wurde die Lagerstabilität und die Bedingungen für die Aushärtung bei der Verwendung geprüft.

| | B1 | VB1 | VB2 | VB3 | VB4 | VB5 |
|---|---|---|---|---|---|---|
| Tetrabutylammoniumjodid | 0.09 | - | - | 0.09 | - | - |
| Dimethylanilin | - | 0.15 | 0.09 | - | 0.15 | 0.09 |
| Viskosität 25° C [mPas]: | | | | | | |
| frisch | 460 | 350 | 370 | 370 | 3870 | 3250 |
| nach 2 Tagen Raumtemp. | 690 | 9700 | 8450 | 2700 | 22340 | 19800 |
| nach 24 Tagen Raumtemp. | 1290 | >50000 | >50000 | 12000 | >50000 | >50000 |
| Gelzeit der frischen Lösung* [Minuten/° C] | | | 7/150 | 8/150 | 17/150 | 9/150 |

* Die Gelzeit ist die Zeit, bei der eine sich in einem Reagenzglas bei einer bestimmten Temperatur befindende Masse ihre Fließfähigkeit verliert.

Beispiel 2

Unter Rühren werden gemischt
455 T Epikote 828® (Diepoxidharz auf Bisphenol A-Basis, Hersteller: SHELL-Chemie)
92 T Phenylglycidylether
453 T Hexahydrophthalsäureanhydrid
0,09 T Tetrabutylammoniumjodid

Diese Mischung wurde für 20 Min. auf 110° C erhitzt, dabei stieg die Viskosität stark an.

Die gebildete niederviskose Schmelze wurde auf ein siliconisiertes Trennpapier, in einer dünnen Schicht von ca. 1 bis 3 mm, ausgegossen, wodurch die Masse rasch auf RT abkühlte und dabei erstarrte.

Die erstarrte Schmelze wurde in einem Labormörser zu einem etwa linsengroßen Granulat zerkleinert (Granulat 1).

Dieses Granulat wurde auf einem Blechdeckel im Trockenschrank bei 110° C zunächst aufgeschmolzen und wurde innerhalb von 30 min bei 110° C in einen unschmelzbaren ausgehärteten Zustand überführt.

Zur Kontrolle der Lagerstabilität wurde das Granulat 1 bei 20° C und 40° C gelagert und in regelmäßigen Abständen die Aufschmelzbarkeit und die Gelzeit bei 150° C bestimmt

| Lagerung | Lagerzeit | aufschmelzbar | Gelzeit bei 150 °C |
|---|---|---|---|
| 20 °C | 5 Tage | ja | 7 Min. |
| 40 °C | 5 Tage | ja | 7 Min. |
| 20 °C | 10 Tage | ja | 7 Min. |
| 40 °C | 10 Tage | ja | 7 Min. |
| 20 °C | 30 Tage | ja | 7 Min. |
| 40 °C | 30 Tage | ja | 7 Min. |

## Ansprüche

1. Lagerstabile, einkomponentige Epoxidharzmassen, erhältlich durch Umsetzung von härtbaren Epoxidverbindungen mit mindestens einem Härter aus der Verbindungsklasse der Polycarbonsäureanhydride und mindestens einem Härtungsbeschleuniger ausgewählt aus der Verbindungsklasse der quarternären Ammonium- oder Phosphoniumsalze bei Temperaturen von ca. 30 bis ca. 150 °C und anschließendes Abkühlen der noch flüssigen oder thermoplastisch verarbeitbaren Epoxidharzmasse auf eine Temperatur unter 30 °C.

2. Epoxidharzmassen nach Anspruch 1, dadurch gekennzeichnet, daß bei der Umsetzung das Verhältnis von Härter zu Epoxidverbindungen so gewählt ist, daß auf eine Epoxidgruppe 1,0 bis 0,7 Anhydridgruppen eingesetzt werden.

3. Epoxidharzmassen nach mindestens einem der Ansprüche 1 oder 2, dadurch gekennzeichnet, daß der Härtungsbeschleuniger in einer Menge von ca. 0,001 bis ca. 0,1 Gew.-% bezogen auf die einkomponentige Epoxidharzmasse eingesetzt wird.

4. Epoxidharzmassen nach mindestens einem der Ansprüche 1 bis 3, dadurch gekennzeichnet, daß es sich bei den härtbaren Epoxidverbindungen um ein Gemisch eines Polyepoxids auf Basis von Bisphenol A mit Monoepoxidverbindungen als Reaktivverdünner handelt.

5. Epoxidharzmassen nach mindestens einem der Ansprüche 1 bis 4, dadurch gekennzeichnet, daß es sich bei dem Polycarbonsäureanhydrid um Bernsteinsäureanhydrid, Phthalsäureanhydrid, Tetrahydrophthalsäureanhydrid, Hexahydrophthalsäureanhydrid, Methylhexahydrophthalsäureanhydrid oder ein Gemisch dieser Anhydride handelt.

6. Epoxidharzmassen nach Anspruch 6, dadurch gekennzeichnet, daß es sich beim quarternären Ammonium- oder Phosphoniumsalze um Tetrabutylammonium- bwz. n-Butyltriphenylphosphoniumsalze handelt.

7. Verfahren zur Herstellung lagerstabiler einkomponentigen Epoxidharzmassen, dadurch gekennzeichnet, daß härtbare Epoxidverbindungen mit mindestens einem Härter aus der Verbindungsklasse der Polycarbonsäureanhydride und mindestens einem Härtungsbeschleuniger ausgewählt aus der Verbindungsklasse der quarternären Ammonium- oder Phosphoniumsalze bei Temperaturen von ca. 30 bis ca. 150 °C miteinander umgesetzt werden und anschließend die noch flüssige oder thermoplastisch verarbeitbare Epoxidharzmasse auf Temperaturen unter 30 °C abgekühlt wird.

8. Verwendung der Epoxidharzmassen nach mindestens einem der Ansprüche 1 bis 8 zur Herstellung von duroplastischen Formteilen.

9. Verwendung der Epoxidharzmassen nach mindestens einem der Ansprüche 1 bis 8 als Isolier-, Einkapselungs-, Einbettungs-, Planarisierungs-, Strukturierungs- oder Trägermaterial in der Elektronik odr Elektrotechnik.

10. Verwendung der Epoxidharzmassen nach mindestens einem der Ansprüche 1 bis 8 zum Beschichten von Oberflächen.

Patentansprüche für den Vertragsstaat: ES

1. Verfahren zur Herstellung lagerstabiler einkomponentigen Epoxidharzmassen, dadurch gekennzeichnet, daß härtbare Epoxidverbindungen mit mindestens einem Härter aus der Verbindungsklasse der Polycarbonsäureanhydride und mindestens einem Härtungsbeschleuniger ausgewählt aus der Verbindungsklasse der quarternären Ammonium- oder Phosphoniumsalze bei Temperaturen von ca. 30 bis ca. 150 °C miteinander umgesetzt werden und anschließend die noch flüssige oder thermoplastisch verarbeitbare Epoxidharzmasse auf Temperaturen unter 30 °C abgekühlt wird.

2. Verfahren nach Anspruch 1, dadurch gekennzeichnet, daß bei der Umsetzung das Verhältnis von Härter zu Epoxidverbindungen so gewählt ist, daß auf eine Epoxidgruppe 1,0 bis 0,7 Anhydridgruppen eingesetzt werden.

3. Verfahren nach mindestens einem der Ansprüche 1 oder 2, dadurch gekennzeichnet, daß der Härtungsbeschleuniger in einer Menge von ca. 0,001 bis ca. 0,1 Gew.-% bezogen auf die einkomponentige Epoxidharzmasse eingesetzt wird.

4. Verfahren nach mindestens einem der Ansprüche 1 bis 3, dadurch gekennzeichnet, daß es sich bei den härtbaren Epoxidverbindungen um ein Gemisch eines Polyepoxids auf Basis von Bisphenol A mit Monoepoxidverbindungen als Reaktivverdünner handelt.

5. Verfahren nach mindestens einem der Ansprüche 1 bis 4, dadurch gekennzeichnet, daß es sich bei dem Polycarbonsäureanhydrid um Bernsteinsäureanhydrid, Phthalsäureanhydrid, Tetrahydrophthalsäureanhydrid, Hexahydrophthalsäureanhydrid, Methylhexahydrophthalsäureanhydrid oder ein Gemisch dieser Anhydride handelt.

6. Verfahren nach mindestens einen der Ansprüche 1-5, dadurch gekennzeichnet, daß es sich beim quarternären Ammonium- oder Phosphoniumsalze um Tetrabutylammonium- bwz. n-Butyltriphenylphosphoniumsalze handelt.

7. Verwendung der Epoxidharzmassen nach mindestens einem der Ansprüche 1 bis 8 zur Herstellung von duroplastischen Formteilen.

8. Verwendung der Epoxidharzmassen nach mindestens einem der Ansprüche 1 bis 8 als Isolier-, Einkapselungs-, Einbettungs-, Planarisierungs-, Strukturierungs- oder Trägermaterial in der Elektronik odr Elektrotechnik.

9. Verwendung der Epoxidharzmassen nach mindestens einem der Ansprüche 1 bis 8 zum Beschichten von Oberflächen.